# EUROPEAN PATENT APPLICATION

(11) **EP 4 682 594 A1**
(43) Date of publication of application: **21.01.2026**
(21) Application number: 25189591.8
(22) Date of filing: 15.07.2025
(51) Int. Cl.: G02B 5/20, G02B 5/28

(54) **ZERO ANGLE SHIFT BANDPASS FILTER**

(30) Priority: 16.07.2024 US 202463672084 P; 11.07.2025 US 202519267011
(71) Applicant: Viavi Solutions Inc., Chandler, AZ 85286 (US)
(72) Inventor: SHKABKO, Andy, Santa Rosa, 95405 (US); OCKENFUSS, Georg J., Santa Rosa, 95404 (US)
(74) Representative: Murgitroyd & Company

(57) **Abstract**

In some implementations, an optical filter assembly includes an optical filter disposed on a first side of a substrate, wherein the optical filter has a thickness greater than a first threshold value, and wherein the optical filter is configured to experience a center wavelength shift of less than a second threshold value for a particular operating center wavelength and for a range of angles of incidence from 0 degrees to at least a third threshold value.

## Description

### CROSS-REFERENCE TO RELATED APPLICATION

This Patent Application claims priority to U.S. Provisional Patent Application No. 63/672,084, filed on July 16, 2024, and entitled "ZERO ANGLE SHIFT BANDPASS FILTER." The disclosure of the prior Application is considered part of and is incorporated by reference into this Patent Application.

### BACKGROUND

An optical filter is used to select a spectral band or a spectral component of incoming light. A high pass filter, for example, selects light at wavelengths longer than an edge wavelength of the filter. Conversely, a low pass filter selects light at wavelengths shorter than an edge wavelength. A bandpass filter is a distinct type of filter, which selects light at wavelengths proximate to a center wavelength of the filter within a bandwidth of the filter. A tunable bandpass filter is an optical filter, the center wavelength of which may be adjusted or tuned.

Filter performance of an optical filter may be degraded when an angle of incidence (AOI) of light directed toward the optical filter changes from a configured angle of incidence (e.g., 0 degrees, 45 degrees, 90 degrees) to a threshold angle of incidence (e.g., greater than approximately 30 degrees deviation from the configured angle of incidence). In this case, band edges may experience a shift to a different wavelength, such as a blue shift to a shorter wavelength.

### SUMMARY

In some implementations, an optical filter assembly includes an optical filter disposed on a first side of a substrate, wherein the optical filter has a thickness greater than a first threshold value, and wherein the optical filter is configured to experience a center wavelength shift of less than a second threshold value for a particular operating center wavelength and for a range of angles of incidence from 0 degrees to at least a third threshold value.

In some implementations, an optical filter includes a filter stack of alternating layers of a first material with a first refractive index and a second material with a second refractive index, wherein the filter stack has at least a first threshold level of transmissivity at a configured center wavelength, and wherein the filter stack is configured to introduce a red shift of less than a second threshold value for angles of incidence between 0 degrees and 30 degrees.

In some implementations, an optical system includes an electro-optic component; and an optical filter disposed on a first side of a substrate, wherein the optical filter has a thickness of greater than a first threshold value, and wherein the optical filter is configured to experience a center wavelength shift of less than a second threshold value for a particular operating center wavelength and for a range of angles of incidence from 0 degrees to at least a third threshold value.

### BRIEF DESCRIPTION OF THE DRAWINGS

Fig. 1 is a diagram of an example implementation described herein.
Fig. 2 is a diagram of an example optical filter assembly.
Figs. 3A-3C are diagrams of characteristics of example optical filters.
Figs. 4A-4D are diagrams of characteristics of example optical filters.

### DETAILED DESCRIPTION

The following detailed description of example implementations refers to the accompanying drawings. The same reference numbers in different drawings may identify the same or similar elements. The following description uses a spectrometer as an example. However, the techniques, principles, procedures, and methods described herein may be used with any sensor, including but not limited to other optical sensors and spectral sensors.

An optical sensor device may include a sensor element array of sensor elements to receive light emitting from an optical source, such as an optical transmitter, a light bulb, or an ambient light source, among other examples. For example, in a spectrometer, an optical sensor device may include an array of sensor elements to receive light reflected off a target object, thereby enabling an identification of the target object. A sensor element may be associated with an optical filter that filters light to the sensor element to enable the sensor element to obtain information regarding a particular spectral range of electromagnetic frequencies. For example, the sensor element may be aligned with an optical filter with a passband in a near-infrared (NIR) spectral range, a visible spectral range, an ultraviolet spectral range, and/or the like.

In other words, an optical system may include an optical filter, such as a bandpass filter, to filter light at wavelengths other than a wavelength of interest for measurement. This light, at wavelengths other than the wavelength of interest for measurement, causes noise, which reduces the performance of the optical system by, for example, obscuring weak signals and lowering the optical system's signal-to-noise ratio, thereby making accurate detection and measurement difficult. The optical system may include a bandpass filter that has a pass band at the wavelength of interest for measurement and that blocks light at other wavelengths. However, angle shifting can result in a change to a wavelength of light that is incident on a bandpass filter. For example, at higher angles of incidence, with which light is incident on an optical filter, the optical filter may cause an angle shift, which is a shift in a center wavelength of light that passes through. Accordingly, light that is directed toward an optical filter at a first wavelength, and at greater than a threshold angle, may be shifted, by the optical filter, to a second wavelength. This angle shifting may result in light that the optical system intends to measure, such as light emitted from an emitter toward a target for spectroscopy, being shifted outside the pass band of a bandpass filter and being blocked by the bandpass filter, thereby resulting in a failure to measure the target.

Conversely, angle shifting can result in unintended light shifting to the wavelength of interest, being within the pass band of the bandpass filter, and being passed through by the bandpass filter, thereby resulting in excess noise in a measurement of a target. For example, stray light from unintended sources (e.g., the sun or a light bulb in a room) may angle shift into a pass band of a bandpass filter and pass through the bandpass filter along with light that is from an intended source (e.g., an optical emitter). When both the stray light and the intended light are directed toward a sensor element, the sensor element may generate an incorrect reading of the intended light.

Furthermore, in some applications, it may be desirable to generate precise measurements of light that is incident on an optical element at relatively high angles of incidence. In such scenarios, angle shift may change the center wavelength of light, resulting in an optical sensor device generating an inaccurate measurement of the light as a result of the relatively high angle of incidence. Accordingly, it is desirable for an optical filter to minimize or eliminate angle shift in a center wavelength of light that is incident on the optical filter at increasing angles. For example, it is desirable that light, which is intended to be measured, is not angle shifted outside a pass band of a bandpass filter and/or that light, which is not intended to be measured, is not angle shifted into a pass band of a bandpass filter. Additionally, when measurements are to be performed on light at relatively high angles of incidence, it is desirable that the light is not affected by angle shifting as a result of the relatively high angles of incidence.

Some implementations described herein provide an optical filter assembly, optical device, optical element, optical module, or optical system with reduced angle shift. For example, an optical filter may include a layer structure that achieves a center wavelength shift of less than 0.1% of a center wavelength of a bandpass of the optical filter. Accordingly, as a particular example, for a 940 nanometer (nm) bandpass filter, the optical filter layer structure may achieve an angle shift of less than 4 nm, less than 1 nm, or less than 0.25 nm among other examples. In some implementations, the optical filter may include a zero-angle shift (ZAS) filter that achieves an angle shift of ± 0.1% of a center wavelength of a band pass. In some implementations, the optical filter may cause any residual angle shift that is caused to a beam to be a red shift, rather than a blue shift, as occurs for other low angle shift (LAS) filters, such as hyper-low angle shift (HLAS) filters. In this way, the optical filter may transmit light without angle shifting the light, even at relatively high angles of incidence. When the optical filter is a bandpass filter with a configured pass band, the optical filter can reflect or block light at wavelengths outside the pass band without angle shift resulting in light outside the configured pass band being shifted into the configured pass band (and passed through), thereby avoiding excess noise or cross-talk in an optical sensor or sensor element array. Furthermore, the optical filter can reflect or block light at wavelengths outside the pass band without angle shifting resulting in light inside the configured pass band being shifted out of the configured pass band (and blocked), thereby avoiding measurement errors. Additionally, when the optical filter is included in an optical system that is to measure light at oblique angles (e.g., at greater than a threshold angle of incidence), the optical filter avoids an angle shift related measurement error of the light at the oblique angles.

The improved blocking of ambient light and the stability of the passband provided by a zero angle shift filter, as described herein, enables optical systems incorporating the zero angle shift filter to operate at lower emitter power, as less ambient light reaches the detector and less signal strength can be used to achieve a high signal-to-noise ratio. This can extend battery life in portable devices, such as smartphones, and enable longer detection ranges in applications such as light detection and ranging (LIDAR), allowing, for example, an automotive LIDAR system to detect objects at greater distances without increasing output power. Thus, the zero angle shift filter facilitates both more energy-efficient and higher-performance optical systems.

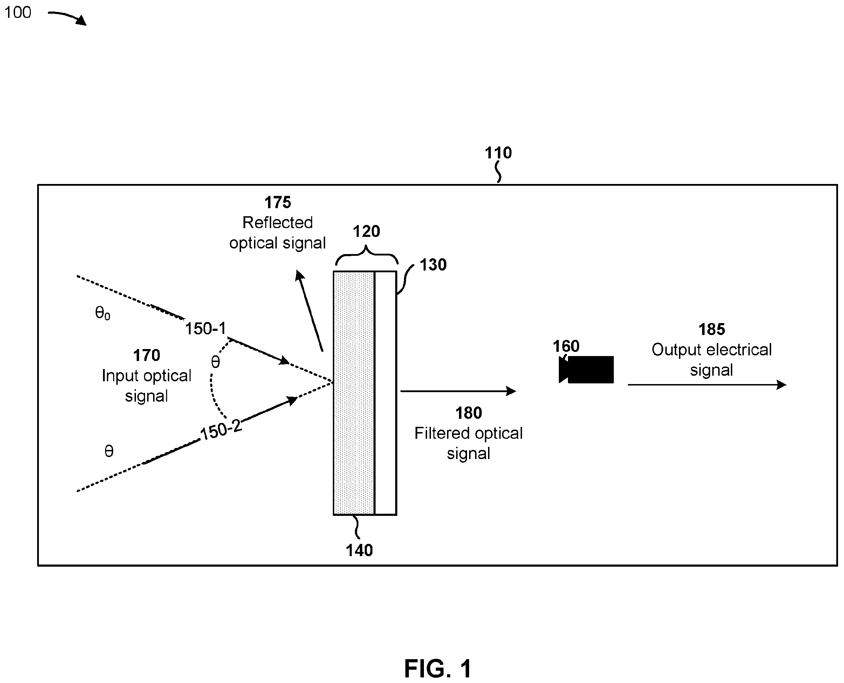

Fig. 1 is a diagram of an example implementation 100 described herein. As shown in Fig. 1, example implementation 100 includes an optical system 110. Optical system 110 may be a portion of an optical system and may provide an electrical output corresponding to a sensor determination. For example, optical system 110 may be a portion of a LIDAR system, a three-dimensional sensing system, a spectroscopic system, a gesture recognition system, a facial recognition system, an object recognition system, an imaging system, an iris recognition system, a motion tracking system, or a communications system, among other examples.

In some implementations, the optical system 110 may include an optical filter assembly 120, which may include a substrate 130 and an optical filter 140. In some implementations, the optical filter assembly 120 may include a bandpass filter. For example, the optical filter assembly 120 may include one or more layers forming a bandpass interference filter that is configured to pass through a first portion of light at a first range of wavelengths and block a second portion of light at a second range of wavelengths. Additionally, or alternatively, the optical filter assembly 120 may include a long wavelength passband (LWP) filter, a short wavelength passband (SWP) filter, a broad wavelength passband (BWP) filter, an infrared cutoff (IR Cut) filter, a notch filter, and/or the like. In some implementations, the optical filter assembly 120 may have a bandpass of between 200 nm and 14000 nm, and may be used in a visible spectral range, an NIR spectral range, a midwave infrared (MWIR) spectral range, an longwave infrared (LWIR) spectral range, or an ultraviolet spectral range, among other examples.

In some implementations, the optical filter 140 may include a zero angle shift filter. For example, the optical filter 140 may include one or more layers forming an angle-sensitive filter that is configured to pass through light without the light experiencing angle shift (e.g., with a minimal amount of angle shift, such as an angle shift of less than a threshold, as described herein). In this case, by minimizing or eliminating angle shift on light, even light at relatively high angles of incidence, the optical filter assembly 120 may ensure that stray light, which enters a cavity of the optical system 110, is not shifted into a wavelength of interest for the optical system 110 (or into a pass band of the optical filter 140). In other words, when the optical system 110 is configured to measure a characteristic of light at a wavelength of, for example, 980 nm, a zero angle shift optical filter 140 ensures that emitted light at 980 nm with a threshold angle of incidence (e.g., greater than 30 degrees or less than -30 degrees) is not shifted away from 980 nm, which might result in the optical system 110 failing to measure the emitted light. Conversely, the optical system 110 ensures that stray light at a wavelength of, for example, 1000 nm and with a threshold angle of incidence, is not shifted to 980 nm, which may result in an erroneous measurement. Accordingly, by reducing angle shift, the optical system 110 can measure light with improved measurement accuracy, reduced noise, or reduced cross-talk, among other examples. Furthermore, when the optical system 110 is configured with multiple bands of light, the zero angle shift optical filter 140 ensures that a first emitted beam at, for example, 985 nm is not shifted to a wavelength of a second emitted beam at, for example 980 nm, which could result in the first beam interfering with measurements of the second beam. In this way, by reducing a likelihood of angle shift induced cross-talk, the optical system 110 and the optical filter 140 enable use of closer bands of light, which may improve spectral density and/or system efficiency.

In some implementations, the optical filter assembly 120 may include one or more other filters. For example, the optical filter assembly 120 may include an anti-reflectance filter. For example, the optical filter assembly 120 may include an anti-reflectance filter that is configured for the same bandpass region as a bandpass filter of the optical filter assembly 120. In this case, the anti-reflectance filter may be coated on a surface or included within the bandpass filter. Additionally, or alternatively, the optical filter assembly 120 may include a long wavelength passband filter, a short wavelength passband filter, or a broad passband filter, among other examples.

Although some implementations described herein may be described in terms of one or more optical filters in a sensor system, some (other) implementations may be used in another type of system, in an optical element external to a sensor system, in an optical element of an optical package, and/or the like. In some implementations, the optical system 110 may include a photo detector system, an avalanche photo detector system, a single-photon avalanche diode (SPAD) detector system, or a complementary metal oxide semiconductor (CMOS) detector system.

In some implementations, substrate 130 may be a transparent substrate, such as a glass substrate, a silicon substrate, a germanium substrate, and/or the like. In some implementations, substrate 130 may include a silicon dioxide substrate. In some implementations, the substrate 130 may be disposed on a particular side of the optical filter 140. For example, the substrate 130 may have an optical filter 140 (e.g., zero-angle shift filter) disposed on a surface of the substrate 130. In this case, the substrate 130 may include one or more other optical filters disposed on top of the optical filter 140 (e.g., such that the optical filter 140 is sandwiched by the one or more other optical filters and the substrate 130). Additionally, or alternatively, the substrate 130 may have optical filters on opposing sides of the substrate 130. For example, the optical filter 140 may be disposed on a first side of the substrate 130 and one or more other optical filters may be disposed on a second side of the substrate 130 (e.g., such that the optical filter 140 and the one or more other optical filters sandwich the substrate 130).

In some implementations, the substrate 130 may be omitted. For example, an optical filter 140 may be disposed directly on the optical sensor 160 or another optical filter without a substrate therebetween or onto which either filter is disposed. In this case, the optical filter 140 and another optical element are matched to have coherence of light. In some implementations, rather than a substrate separating optical elements of the optical system 110, such as the optical filter 140 and another optical filter or the optical sensor 160, another medium may separate optical elements of optical system 110, such as an air gap, a gaseous gap, or a liquid gap, among other examples.

In some implementations, the optical filter 140 may include a set of alternating high refractive index layers and low refractive index layers (e.g., an alternating arrangement of multiple high refractive index layers and multiple low refractive index layers). For example, the optical filter 140 may include a high refractive index material, such as amorphous silicon or niobium titanium oxide, among other examples. Additionally, or alternatively, the optical filter 140 may include a silicon layer, a silicon dioxide layer, a hydrogenated silicon layer, a tantalum pentoxide layer, a niobium pentoxide layer, a germanium layer, a silicon germanium layer, a hydrogenated silicon germanium layer, a niobium tantalum oxide layer, a titanium dioxide layer, a silicon nitride layer, an aluminum oxide layer, a niobium oxide layer, an aluminum nitride layer, or a combination thereof, among other examples. Additionally, or alternatively, the optical filter 140 may include another type of high refractive index material layer with a refractive index of greater than 2.0, greater than 2.5, greater than 3.0, greater than 3.5, and/or the like.

In some implementations, the optical filter 140 may include a low refractive index material, such as silicon dioxide. Additionally, or alternatively, the optical filter 140 may include another type of low refractive index material layer with a refractive index of less than 2.5, less than 2.0, less than 1.5, and/or the like. For example, the optical filter 140 may include a set of alternating layers of hydrogenated silicon and silicon dioxide layers for a bandpass filter operating at 940 nm. In some implementations, the optical filter 140 may include three or more different materials. In this case, using three or more different types of layers may enable the optical filter 140 to achieve a higher transmissivity and/or even further reduced angle shift at some wavelengths, relative to using only two different materials.

As further shown in Fig. 1, and as shown by reference number 170, an input optical signal is directed toward optical filter assembly 120 at one or more angles of incidence, *θ*. For example, input optical signals 150-1 and 150-2 may be directed toward optical filter assembly 120 at respective angles of incidence *θ₀* (e.g., a configured angle of incidence) and *θ*. For example, an electro-optic component, such as an optical emitter of the optical system 110, may transmit a beam including the input optical signals 150-1 and 150-2. As shown by reference number 175, a first portion of the input optical signal is reflected by optical filter assembly 120. For example, based on a portion of the input optical signal being outside of a passband of a bandpass filter of the set of optical filters 140, the set of optical filters 140 may reflect the portion of the input optical signal.

As further shown in Fig. 1, and by reference number 180, another portion of the optical signal is transmitted through optical filter assembly 120. For example, a portion of the input optical signal within the passband of optical filter assembly 120 is passed through optical filter assembly 120, as described in more detail herein.

As shown by reference number 185, based on a portion of the input optical signal being passed to another electro-optic component, such as the optical sensor 160 (e.g., an optical detector or photo detector), the optical sensor 160 may provide an output electrical signal for optical system 110. For example, optical sensor 160 may provide an output electrical signal identifying an intensity of light, a characteristic of light (e.g., a spectroscopic signature), a wavelength of light, and/or the like.

As indicated above, Fig. 1 is provided merely as an example. Other examples may differ from what is described with regard to Fig. 1.

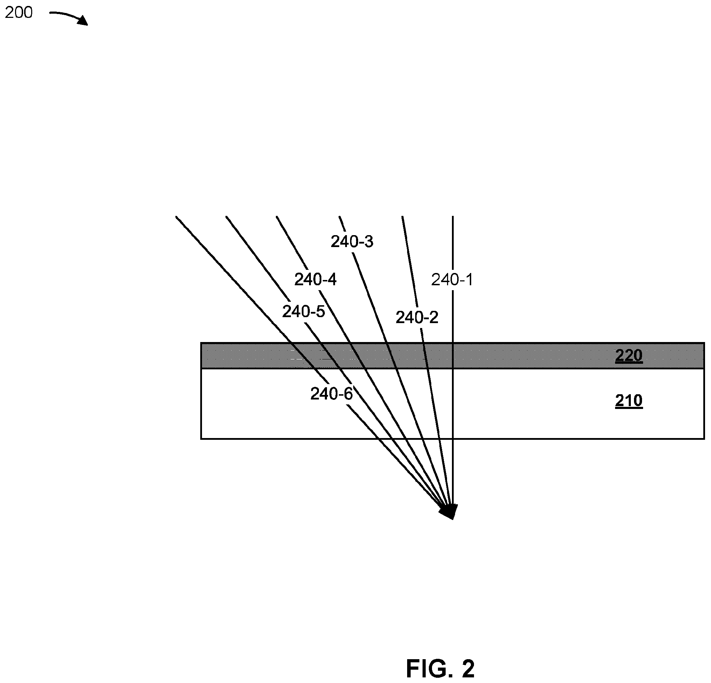

Fig. 2 is a diagram of an example optical filter assembly 200. As shown in Fig. 2, optical filter assembly 200 includes a substrate 210, onto which is disposed an optical filter 220. A set of beams 240-1 through 240-6 may be incident on the optical filter 220 at different angles.

In some implementations, the optical filter 220 may be a passband filter that exhibits a low amount of angle shift, such as zero (or near-zero) angle shift. For example, the optical filter 220 may be a low angle shift passband filter. In this case, the optical filter 220 may be a low angle shift bandpass filter manufactured using hydrogenated silicon (Si:H) or amorphous silicon. In some implementations, the optical filter 220 may be associated with less than a threshold angle shift at greater than a threshold angle of incidence, as described in more detail here. For example, the optical filter 220 may be associated with less than 5% angle shift (e.g., as a percentage of a center wavelength of light in a passband of the optical filter 220), less than 1% angle shift, less than 0.5% angle shift, less than 0.1% angle shift, and/or the like at a particular range of angles of incidence. In this case, the particular range of angles of incidence may be a range of approximately 0 degrees to approximately 60 degrees, approximately 0 degrees to approximately 45 degrees, approximately 0 degrees to approximately 30 degrees, and/or the like.

In some implementations, a zero angle shift filter, such as the optical filter 220, may include a bandpass filter that exhibits an angle shift of a center of a passband of, for example, less than approximately 10 nm, less than 5 nm, less than 1 nm, less than 0.5 nm, or less than 0.2 nm at an angle range of approximately 0 degrees to approximately 30 degrees in, for example, a near-infrared (NIR) spectral range. In some implementations, a zero angle shift filter, such as the optical filter 220, may exhibit an angle shift of less than ± 0.1% or less than ±0.05% of a center wavelength of incident light. In some implementations, a minimal amount of angle shift, such as an angle shift less than a threshold described above, may be in a red shift direction (e.g., a positive direction to a longer wavelength), rather than a blue shift direction as occurs with other optical filters. In some implementations, a zero angle shift filter, such as the optical filter 220, enables the use of a narrower bandwidth for a pass band, compared to low angle shift and hyper-low angle shift filters. Because the zero angle shift filter substantially eliminates angle shift across a range of incidence angles, the pass band can be designed to be narrower while still maintaining its spectral selectivity for a wavelength of interest. This allows a bandpass filter to block a greater proportion of ambient or stray light, thereby improving the signal-to-noise ratio in optical systems. As a result, optical systems incorporating the zero angle shift filter can achieve higher measurement accuracy and greater reduction of interference from unwanted wavelengths, even in environments with significant ambient illumination.

In some implementations, the optical filter 220 may include multiple layers. For example, multiple layers may be deposited and/or patterned, such as by using a photolithography procedure, to form optical filter 220. In some implementations, the optical filter assembly 200 may be associated with a particular size. For example, the optical filter 220 may be associated with a thickness of between approximately 10 nm and 5000 nm. Additionally, or alternatively, the optical filter 220 may be associated with a thickness of up to 10,000 nm or a thickness greater than 10,000 nm.

In some implementations, greater than a threshold percentage of light may pass through optical filter 220 at less than the threshold angle of incidence (or less than a threshold deviation from a configured angle of incidence). For example, the optical filter 220 may permit, for light with an angle of incidence of less than approximately 60 degrees, less than approximately 45 degrees, less than approximately 30 degrees, and/or the like, greater than approximately 75% transmission, greater than approximately 90% transmission, greater than approximately 95% transmission, greater than approximately 99% transmission, or greater than approximately 99.9% transmission, respectively, among other examples.

In some implementations, the optical filter assembly 200 may be associated with a particular spectral range for which the optical filter assembly 200 is to be transmissive in a configured range of angles of incidence. For example, the optical filter assembly 200 may be associated with a spectral range of between approximately 600 nm and approximately 1200 nm, approximately 700 nm and approximately 1100 nm, approximately 800 nm and approximately 1000 nm, and/or the like. Additionally, or alternatively, the optical filter assembly 200 may be associated with a spectral range of between approximately 1200 nm and approximately 2000 nm, approximately 1400 nm and approximately 1800 nm, approximately 1500 nm and approximately 1700 nm, and/or the like. Additionally, or alternatively, the optical filter assembly 200 may be associated with a spectral range of between approximately 200 nm and approximately 4000 nm, approximately 1000 nm and approximately 3000 nm, approximately 1500 nm and approximately 2500 nm, and/or the like. In some implementations, the optical filter assembly 200 may be associated with a spectral range of between approximately 100 nm and approximately 14000 nm or a sub-range thereof. Additionally, or alternatively, the optical filter assembly 200 may be associated with a visible spectral range, a near infrared spectral range, an ultraviolet spectral range, a combination thereof, and/or the like.

In some implementations, the optical filter assembly 200 may include one or more other filters, such as a blocker, an edge filter, a bandpass filter, and/or the like. In some implementations, the optical filter assembly 200 may include a protective covering (e.g., to protect optical filter 220). In some implementations, the optical filter assembly 200 may include layers of one or more other materials. For example, the optical filter assembly 200 may include, such as for optical filter 220, a silicon (Si) based material, a hydrogenated silicon (Si:H) based material, a germanium (Ge) based material, a hydrogenated germanium (Ge:H) based material, a silicon germanium (SiGe) based material, an aluminum (Al) based material, a silver (Ag) based material, a silicon dioxide (SiO₂) material, an aluminum oxide (Al₂O₃) material, a titanium dioxide (TiO₂) material, a niobium pentoxide (Nb₂O₅) material, a tantalum pentoxide (Ta₂O₅) material, a magnesium fluoride (MgF₂) material, a niobium titanium oxide (NbTiOx) material, a niobium tantalum pentoxide material (NbTa₂O₅), a zinc oxide material (ZnO), a platinum (Pt) material, a gold (Au) material, a fluorescent material, and/or the like. In some implementations, a spacer layer or material may be included in one or more optical filters.

In some implementations, the optical filter assembly 200 may be bidirectional. For example, although the optical filter assembly 200 are shown with light transmission in a particular direction, the optical filter assembly 200 may be configured to allow light to pass through in another direction.

As indicated above, Fig. 2 is provided merely as an example. Other examples are possible and may differ from what was described with regard to Fig. 2.

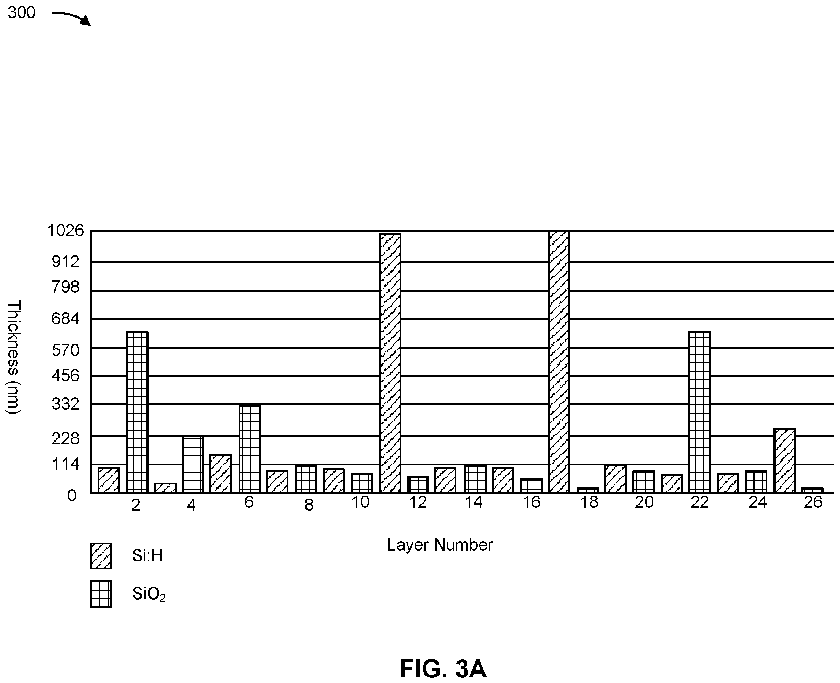

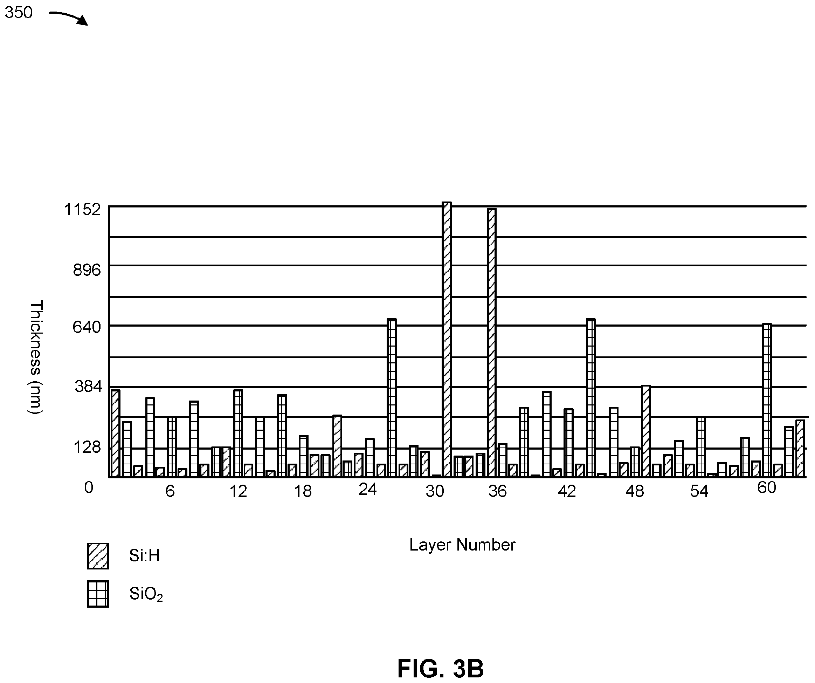

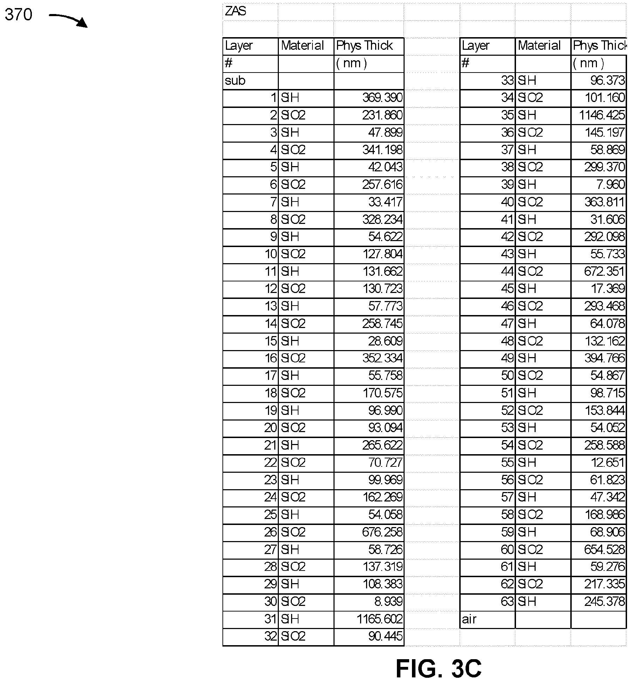

Figs. 3A-3C are diagrams of characteristics of example optical filters. As shown in Fig. 3A, an example 300 of a hyper low angle shift (HLAS) optical filter may include a layer stack of alternating hydrogenated silicon (Si:H) and silicon dioxide (SiO₂) layers. The HLAS optical filter may include 26 layers and may have a total thickness of approximately 3233 nm. In contrast, as shown in Fig. 3B, an example 350 of a zero angle shift (ZAS) optical filter, such as the optical filter 140 or the optical filter 220, as described herein, may include a layer stack of alternating hydrogenated silicon and silicon dioxide layers with a layer count of 63 layers and a total thickness of approximately 9003 nm. Fig. 3C illustrates an example 370 of another ZAS optical filter, which may include alternating layers of hydrogenated silicon (SiH) and silicon dioxide (SiO₂), with a substrate (sub) on a first end and an air interface at a second end. In some implementations, a zero angle shift filter may be fabricated as a multilayer thin film structure including alternating layers of high refractive index material (e.g., hydrogenated silicon) and low refractive index material (e.g., silicon dioxide). For a center wavelength of approximately 940 nm, a zero angle shift filter may include between 50 and 100 alternating layers, with individual high refractive index layers having a physical thickness in the range of 1 nm to 1200 nm and low refractive index layers having a thickness in the range of 1 nm to 700 nm. The overall stack thickness may range from 5000 nm to 15000 nm.

ZAS optical filters may, generally, have substantially larger quantities of layers and substantially greater total thicknesses than HLAS optical filters (and low angle shift (LAS) optical filters). This results in reduced angle shift (e.g., a center wavelength (CWL) shift) for ZAS optical filters relative to HLAS optical filters and LAS optical filters.

Additionally, or alternatively, based on a ZAS optical filter having a larger quantity of layers and greater total thickness, the ZAS optical filter can compensate for spectral ripples (e.g., variations in transmission or blocking that arise at higher angles of incidence). By, for example, doubling the quantity of layers and increasing the overall thickness relative to HLAS and LAS optical filters, a ZAS optical filter is able to control and align the ripples such that the ripples either reinforce a desired bandpass or enhance a blocking range. This compensation mechanism ensures that the ZAS optical filter's passband remains stable and that out-of-band transmission or leakage is minimized, even as the angle of incidence increases. The increased quantity of layers provides additional degrees of freedom in design, enabling precise control over the ZAS optical filter's spectral response across a range of relevant angles.

In some implementations, a ZAS optical filter may cause a beam to exhibit a red shift, when passing through. For example, when a ZAS optical filter causes a beam to undergo a minimal amount of angle shift at various angles of incidence (e.g., an angle shift with a magnitude of, for example, less than 0.2 degrees between AOIs of 0 degrees and 30 degrees), the ZAS optical filter may cause the minimal amount of angle shift to be a red shift to a longer wavelength. In contrast, HLAS and LAS optical filters cause beams to exhibit blue shifts when passing through. Accordingly, a ZAS optical filter may be selected when, accounting for a minimal amount of angle shift, it is desirable that a wavelength of light, that has passed through the ZAS optical filter, be no shorter than the wavelength of light before passing through the ZAS optical filter. In other words, when light is emitted with a particular wavelength, an HLAS or LAS optical filter may cause the particular wavelength to blue shift to a shorter wavelength. Accordingly, a detector that is configured to detect wavelengths of at least a configured wavelength may fail to detect the light when the light blue shifts to the shorter wavelength. In contrast, the ZAS optical filter may ensure that the particular wavelength only red shifts (a minimal amount) to a longer wavelength, resulting in the detector still detecting the light even when the light is shifted from the particular wavelength. Accordingly, ZAS optical filters may be particularly useful with bandpass filters, detectors, or other optical elements that have a wavelength cutoff for shorter wavelengths.

Additionally, or alternatively, a ZAS optical filter may have greater durability than an HLAS or LAS optical filter. For example, based on having a greater layer count and/or greater thickness, the ZAS optical filter may exhibit greater resistance to environmental degradation and/or damage relating to physical impacts. However, the ZAS optical filter may be less miniaturized than HLAS or LAS optical filters, which may result in ZAS optical filters being unsuited to some miniaturized use cases.

Additionally, or alternatively, in other conventional multilayer interference filters, an angle-dependent shift of a passband can be predicted using an equation that relates the effective refractive index of a layer stack to the angle of incidence. However, in the case of a ZAS optical filter, as described herein, such an equation no longer holds, as the ZAS optical filter achieving zero angle shift would mathematically result in an infinite effective refractive index. Accordingly, the ZAS optical filter's behavior operates differently from theoretical, mathematical models, achieving zero or near-zero angle shift through a complex multilayer structure rather than through manipulation of an effective refractive index.

As indicated above, Figs. 3A-3C are provided merely as examples. Other examples are may differ from what is described with regard to Figs. 3A-3C.

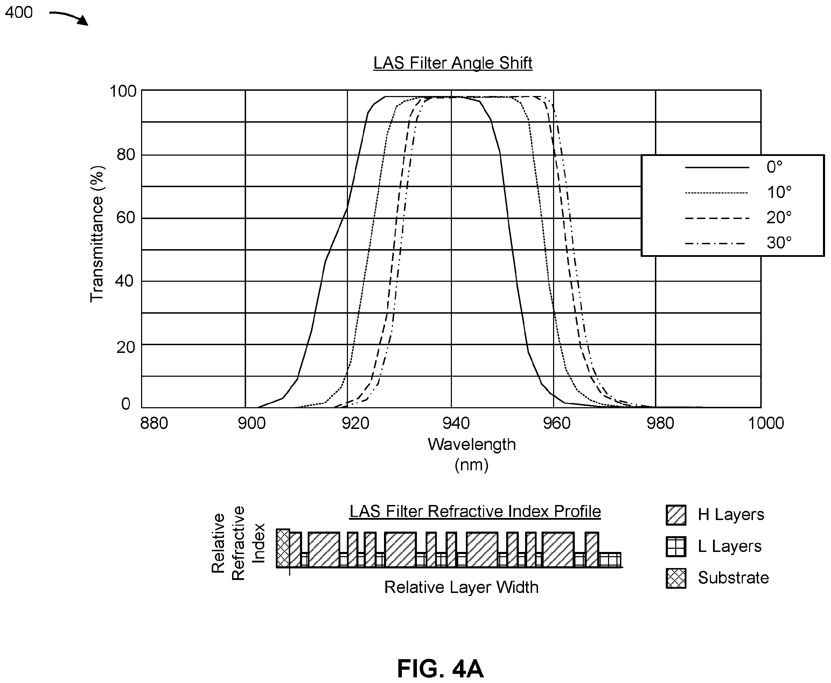

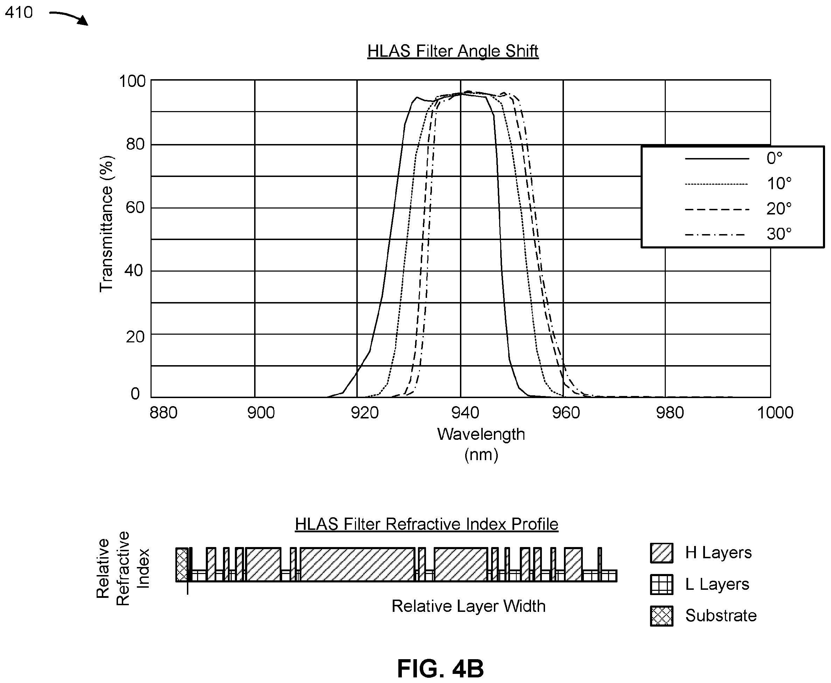

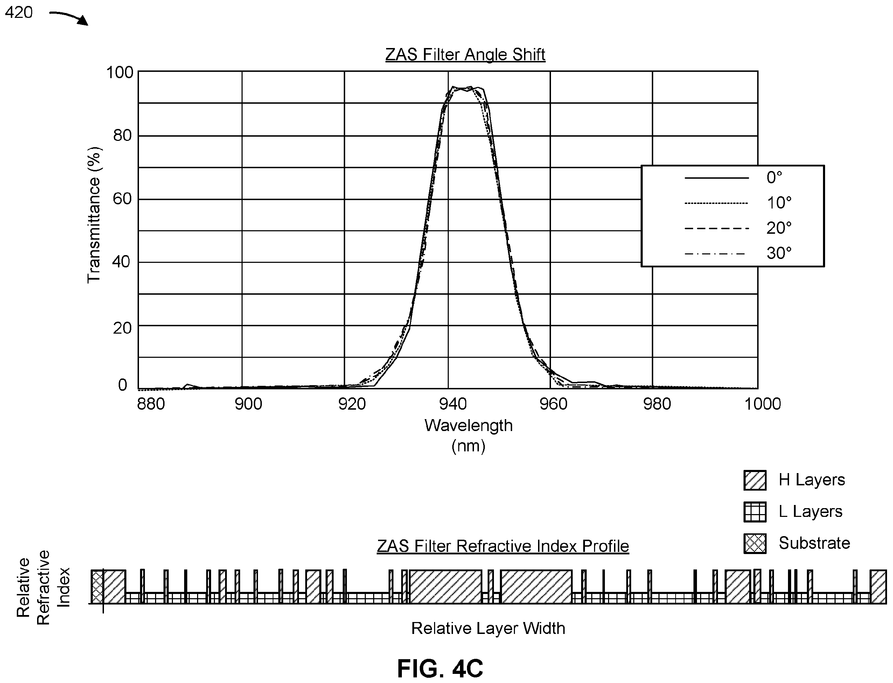

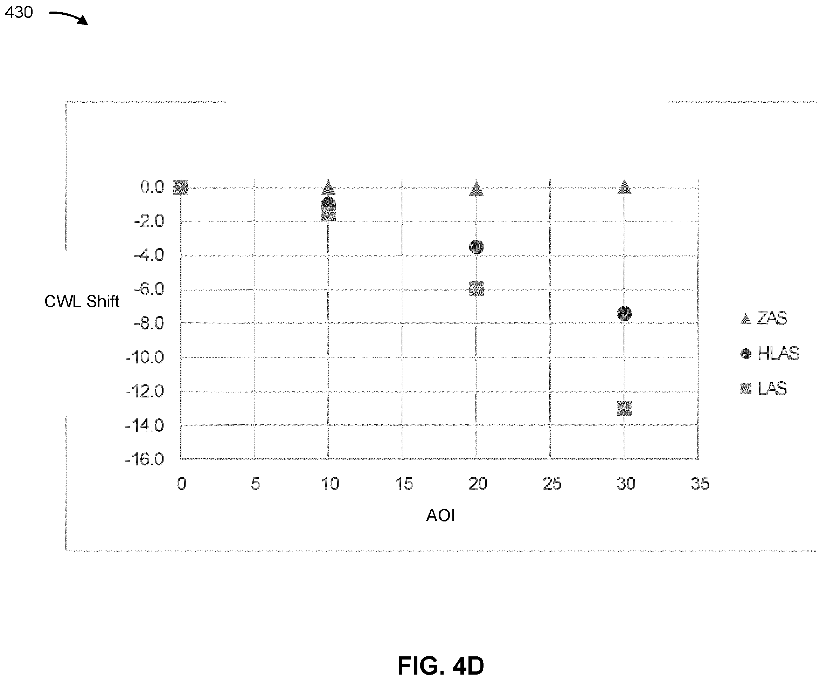

Figs. 4A-4D are diagrams of characteristics of example optical filters. As shown in Fig. 4A, an example 400 of an LAS filter, with a given refractive index profile (e.g., a substrate and a set of high (H) refractive index layers and low (L) refractive index layers in an alternating stack configuration), may have a center wavelength at approximately 940 nm and may exhibit an angle shift of approximately -13 nm between angles of incidence of 0 degrees and 30 degrees. As shown in Fig. 4B, an example 410 of a HLAS filter, with a given refractive index profile (e.g., a substrate and a set of high (H) refractive index layers and low (L) refractive index layers in an alternating stack configuration), may have the center wavelength at approximately 940 nm and may exhibit an angle shift of approximately -7.4 nm between angles of incidence of 0 degrees and 30 degrees. As shown in Fig. 4C, an example 420 of a ZAS filter, as described herein with a given refractive index profile (e.g., a substrate and a set of high (H) refractive index layers and low (L) refractive index layers in an alternating stack configuration), may have the center wavelength at approximately 940 nm and may exhibit an angle shift of less than approximately 1 nm between angles of incidence of 0 degrees and 30 degrees. As further shown in Fig. 4C, the transmissivity of the ZAS optical filter remains approximately the same (e.g., at approximately 95%) across the range of angles of incidence of 10 degrees to 30 degrees). Fig. 4D illustrates an example 430 of a comparison of the LAS, HLAS, and ZAS optical filters. As shown, the ZAS optical filter has a lower angle shift than the HLAS and LAS optical filters across the range of angles of incidence of 0 degrees to 30 degrees, Further, the ZAS optical filter may exhibit a lower angle shift than a non-LAS optical filter (e.g., a bandpass filter that is not configured for low angle shift, which may have an angle shift of approximately 34 nm over a range of angles of incidence of 0 degrees to 30 degrees). Although some implementations are described in terms of a range of angles of incidence of 0 degrees to 30 degrees, it is contemplated that a ZAS optical filter described herein may achieve reduced angle shift, relative to other filters, across a wider range of angles of incidence, such as a range of angles of incidence from 0 degrees to 40 degrees, 0 degrees to 50 degrees, 0 degrees to 60 degrees, or a greater range.

As indicated above, Figs. 4A-4D are provided merely as examples. Other examples are may differ from what is described with regard to Figs. 4A-4D.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Other embodiments of the present invention include the following clauses:
1. An optical filter assembly, comprising:
   an optical filter disposed on a first side of a substrate,
   wherein the optical filter has a thickness greater than a first threshold value, and
   wherein the optical filter is configured to experience a center wavelength shift of less than a second threshold value for a particular operating center wavelength and for a range of angles of incidence from 0 degrees to at least a third threshold value.
2. The optical filter assembly of clause 1, wherein the first threshold value is at least 10,000 nanometers.
3. The optical filter assembly of clause 1, wherein the second threshold value is less than 4 nanometers.
4. The optical filter assembly of clause 1, wherein the second threshold value is less than 1 nanometer.
5. The optical filter assembly of clause 1, wherein the second threshold value is less than 0.25 nanometers.
6. The optical filter assembly of clause 1, wherein the third threshold value is at least 30 degrees.
7. The optical filter assembly of clause 1, further comprising at least one of:
   an anti-reflectance filter,
   a long wavelength passband filter,
   a short wavelength passband filter, or
   a broad passband filter.
8. The optical filter assembly of clause 1, wherein the optical filter is a zero angle shift (ZAS) bandpass filter.
9. The optical filter assembly of clause 1, wherein the center wavelength shift is in a positive direction.
10. An optical filter, comprising:
   a filter stack of alternating layers of a first material with a first refractive index and a second material with a second refractive index,
   wherein the filter stack has at least a first threshold level of transmissivity at a configured center wavelength, and
   wherein the filter stack is configured to introduce a red shift of less than a second threshold value for angles of incidence between 0 degrees and 30 degrees.
11. The optical filter of clause 10, wherein the first refractive index greater than the second refractive index.
12. The optical filter of clause 10, wherein the first material includes at least one of:
   an amorphous silicon layer, or
   a hydrogenated silicon layer.
13. The optical filter of clause 10, wherein the second material includes at least one of:
   a silicon oxide layer,
   a titanium oxide layer,
   a tantalum oxide layer,
   aluminum oxide layer, or
   a niobium oxide layer.
14. The optical filter of clause 10, wherein the configured center wavelength is in a range of 100 nanometers (nm) to 14000 nm.
15. The optical filter of clause 10, wherein the second threshold value has a magnitude of less than 0.2nanometers.
16. An optical system, comprising:
   an electro-optic component; and
   an optical filter disposed on a first side of a substrate,
   wherein the optical filter has a thickness of greater than a first threshold value, and
   wherein the optical filter is configured to experience a center wavelength shift of less than a second threshold value for a particular operating center wavelength and for a range of angles of incidence from 0 degrees to at least a third threshold value.
17. The optical system of clause 16, wherein the electro-optic component is an optical emitter configured to emit at the particular operating center wavelength.
18. The optical system of clause 16, wherein the electro-optic component is an optical detector configured to detect at the particular operating center wavelength.
19. The optical system of clause 16, wherein the substrate is a glass substrate.
20. The optical system of clause 16, wherein the center wavelength shift is to a shorter wavelength with increasing angles of incidence.

## Claims

1. An optical filter assembly (120), comprising:
an optical filter (140) disposed on a first side of a substrate (130),
wherein the optical filter has a thickness greater than a first threshold value, and
wherein the optical filter is configured to experience a center wavelength shift of less than a second threshold value for a particular operating center wavelength and for a range of angles of incidence from 0 degrees to at least a third threshold value.

2. The optical filter assembly of claim 1, wherein the first threshold value is at least 10,000 nanometers.

3. The optical filter assembly of claim 1 or claim 2, wherein the second threshold value is less than 4 nanometers, optionally less than 1 nanometer, optionally less than 0.25 nanometers.

4. The optical filter assembly any one of the preceding claims, wherein the third threshold value is at least 30 degrees.

5. The optical filter assembly of any one of the preceding claims, further comprising at least one of:
an anti-reflectance filter,
a long wavelength passband filter,
a short wavelength passband filter, or
a broad passband filter.

6. The optical filter assembly of any one of the preceding claims, wherein the optical filter is a zero angle shift (ZAS) bandpass filter.

7. The optical filter assembly of any one of the preceding claims, wherein the center wavelength shift is in a positive direction.

8. An optical filter (140), comprising:
a filter stack of alternating layers of a first material with a first refractive index and a second material with a second refractive index,
wherein the filter stack has at least a first threshold level of transmissivity at a configured center wavelength, and
wherein the filter stack is configured to introduce a red shift of less than a second threshold value for angles of incidence between 0 degrees and 30 degrees.

9. The optical filter of claim 8, wherein the first refractive index greater than the second refractive index.

10. The optical filter of claim 8 or claim 9, wherein either the first material includes at least one of an amorphous silicon layer or a hydrogenated silicon layer, or wherein the second material includes at least one of a silicon oxide layer, a titanium oxide layer, a tantalum oxide layer, aluminum oxide layer, or a niobium oxide layer, or wherein both.

11. The optical filter of any one of claims 8 to 10, wherein either the configured center wavelength is in a range of 100 nanometers (nm) to 14000 nm, or wherein the second threshold value has a magnitude of less than 0.2 nanometers, or wherein both.

12. An optical system (110), comprising:
an electro-optic component; and
an optical filter (140) disposed on a first side of a substrate (130),
wherein the optical filter has a thickness of greater than a first threshold value, and
wherein the optical filter is configured to experience a center wavelength shift of less than a second threshold value for a particular operating center wavelength and for a range of angles of incidence from 0 degrees to at least a third threshold value.

13. The optical system of claim 12, wherein either the electro-optic component is an optical emitter configured to emit at the particular operating center wavelength, or wherein the electro-optic component is an optical detector configured to detect at the particular operating center wavelength, or wherein both.

14. The optical system of claim 12 or claim 13, wherein the substrate is a glass substrate.

15. The optical system of any one of claims 12 to 14, wherein the center wavelength shift is to a shorter wavelength with increasing angles of incidence.
